Europäisches Patentamt

European Patent Office

Office européen des brevets

(19)

(11) **EP 1 198 139 A1**

(12) **EUROPEAN PATENT APPLICATION**

(43) Date of publication:
**17.04.2002 Bulletin 2002/16**

(51) Int Cl.$^7$: **H04N 7/26**

(21) Application number: **00122484.9**

(22) Date of filing: **13.10.2000**

(84) Designated Contracting States:
**AT BE CH CY DE DK ES FI FR GB GR IE IT LI LU
MC NL PT SE**
Designated Extension States:
**AL LT LV MK RO SI**

(71) Applicant: **MATSUSHITA ELECTRIC INDUSTRIAL
CO., LTD.
Kadoma-shi, Osaka 571-8501 (JP)**

(72) Inventors:
• **Landsiedel, Thilo
63110 Rodgau (DE)**
• **Wild, Arne
55129 Mainz (DE)**

(74) Representative: **Grünecker, Kinkeldey,
Stockmair & Schwanhäusser Anwaltssozietät
Maximilianstrasse 58
80538 München (DE)**

(54) **Method and apparatus for encoding video fields**

(57)     The present invention relates to a method and apparatus for encoding video sequences of a field repetition rate of 50 Hz and 60 Hz. An improved accuracy of film mode detection is achieved by taking an additional image portion of the fields into account when detecting motion between fields of the video sequence. This results in an increased efficiency of the encoding procedure.

**Fig. 4**

**Description**

The present invention relates to a method and an apparatus for encoding a sequence of video fields.

Image data compression aims to reduce the amount of data to be recorded or transmitted. A conventional, uncompressed serial digital television signal has a data rate of 270 Mbit/s. Such an amount of data can neither be transmitted to each television receiver by normal broadcasting service nor recorded on a storage medium. Because of limited bandwidth, memory and computational resources, video data has to be encoded (compressed) in order to increase the efficiency of communication systems.

Two categories of data compression algorithms can be distinguished, namely lossless and "lossy" algorithms. Lossy techniques cause image quality degradation in each compression/decompression step. Careful consideration of the human visual perception ensures that the degradation is often unrecognisable, although this depends on the selected compression ratio. Lossy techniques provide far greater compression ratios than lossless techniques.

Lossless encoding guarantees that the decompressed image is absolutely identical to the image before compression. This is an important requirement for some application domains. Examples for such lossless techniques are run length encoding, Huffman encoding, and entropy coding.

In lossy coding techniques a combined operation is responsible for the compression. A first step is aimed at the exploitation of statistical characteristics of an image, in particular of a high correlation of image data and redundancy. For this purpose, transform coding methods are employed. These transformations convert a spatial representation of two dimensional video data into the frequency domain. Examples for such transformations are the Fourier Transform, the Discrete Cosine Transform (DCT), the Kahrunen-Loewe Transform. These transformations result in a representation having a reduced number of coefficients which contain most of the essential video information by decorrelating the original signal. The decorrelation generally results in the signal energy being redistributed among only a small set of transform coefficients. Usually, such transformations do not cause any loss of information.

In a second step, the obtained transform coefficients are quantized to reduce the amount of information in the frequency domain. Quantisization is usually a non-reversible operation. In this way, many coefficients may be discarded after quantisization.

A general transform coding scheme involves subdividing an image into smaller blocks and performing a unitary transform on each sub image.

During the last years, a plurality of standardization processes based on transform coding has lead to a plurality of standards like JPEG, MPEG, etc. These standards address different kinds of source video data and levels of image quality. Such source video data might be still pictures, video sequences of progressive or interlaced images. The levels of image quality range from VHS quality (MPEG-1) to HDTV having a high resolution.

Video signals received by a television receiver are generally in interlaced mode. In interlaced mode, only fields are transmitted to the receiver. Each field has half the number of lines compared with a complete frame, and succeeding fields comprise alternate lines of a frame, wherein a first field generally comprises lines having an odd line number and the succeeding field comprises lines have an even line number with respect to the lines of a corresponding frame.

A television receiver receives fifty fields per second in compliance with PAL television standard and sixty fields per second in conformity with NTSC television standard. Consequently, the PAL field repetition rate is 50Hz and NTSC field repetition rate 60Hz. Such a repetition rate reduces large area flicker when compared with a 25Hz/30Hz repetition rate of frames. The PAL and NTSC repetition rates correspond to a new field every 20ms (PAL) or 16.6ms (NTSC).

When a video camera is used as a video source, movements of a filmed object result in different positions of said object in consecutive fields. A re-composition of such two fields into a single frame would result in objectionable errors, such as saw tooth artefacts, in the reproduced picture as both fields relate to different motion phases.

Motion picture data is composed of complete frames only. Such motion picture information with a frame rate of twenty-four frames per second is converted into an interlaced video format, using a commonly known pulldown technique.

A 2-2 pulldown technique is employed in order to convert motion picture film into an interlaced PAL video signal. The 2-2 pulldown technique generates two fields out of each frame, which is repeated twice. In the 2-2 pulldown technique, two succeeding fields contain information originating from the same frame. To overcome the disparity in frequency, the film is played slightly faster at 25 instead of the original 24 frames per second.

When converting motion picture data into NTSC video signals, film data with a rate of 24 frames per second is converted into a 60 field per second video signal using a 3-2 pulldown technique. The 3-2 pulldown technique generates two video fields for a given film frame and three video fields for the next film frame.

In order to improve the efficiency of encoding methods it is desirable to base an encoding procedure of interlaced video signals on frames instead of fields. A frame based encoding enables the reduction of redundant information of two consecutive fields to a minimum of relevant image information. For this purpose, consecutive fields may be reassembled to frames. Due to the time offset between consecutive fields, a reassembling is not possible in case the image content includes moving objects. A frame originating on such two fields reduces the coding efficiency. The field data need not to be reassembled as a whole but maybe reassembled per sub-block prior to being subjected to an encoding procedure.

A re-composition of succeeding fields into frames without a loss of encoding efficiency and image quality degradation is only possible if a video sequence can reliably determined to originate from motion picture data and the video fields which correspond to a common film frame are identified. As no special information is included in video signals for indicating whether or not a field originates from motion picture data, a film mode detection is employed before a re-composition of fields is carried out. Film mode detection distinguishes whether input video signals originate from motion picture data or e.g. from a video camera.

In case the source of film conversion is an animated or computer generated scene, every pulldown mode is possible, e.g. 3-4, 4-4, 4-5 etc. It depends largely on the quality of the scene and the number of source frames available. However, there is no standard guiding such conversions. It is a beneficial feature if the film mode detection in an encoding apparatus can be set to detect virtually any pulldown.

Document EP-A2-0 720 366 describes an apparatus and method for film mode detection. The method addresses a detection of patterns representative of 2-2 pulldown and 3-2 pulldown film originated frames. A film data comparison and accumulation unit calculates differences between pixels of a current field and vertical adjacent pixels of a previous field. The calculated differences are accumulated per field. Such field difference information is evaluated in a film data reduction unit by determining changes in the field difference information signal on successive fields. The changes in the field difference are compared to expected film-generated patterns using correlation techniques. For this purpose, a delayed field difference signal is subtracted from a current field difference signal. A one-bit per field sequence formed by the sign-bit of the resulting difference signal is compared with the predetermined film-generated patterns.

A further conventional film mode detector for 50Hz television signals is known from WO 94/30006. The described apparatus determines whether a video source is a motion picture film and identifies which two fields are from the same film frame. The described detection scheme looks for differences in motion between consecutive fields. The motion signal, consisting of ones for "motion" and zeros for "no motion", is applied to a sequence detector which looks for a "10" pattern in the motion signal. A detection of nine successive sequences of film mode pattern "10" causes the detector to enter film mode. A return to camera mode (called video mode) is performed when a detected pattern is inconsistent with film mode, namely a pattern of two ones. In case no motion is detected (corresponding to a pattern of continuous zeros) the present mode, either film or camera mode, is maintained.

Video information of an interlaced television signal may originate from motion picture film or from a video camera source. In an increasing number of situations an interlaced video signal comprises video information of both sources in a single field, namely a main portion in film mode and a smaller portion in camera mode. Such fields regularly occur when television signals originating from motion picture film comprise inserted/overlaid information originating from a video camera source. Such additional information may be a text banner inserted in a bottom area of the video image. Said text banner or ticker usually displays service information provided by the broadcaster. Inserted service information may relate to the displayed image content, to a later program or to particular news information as e.g. stock exchange rates.

The inserted ticker may be at different positions within the field, depending on a broadcaster or country wide convention.

The afore mentioned mixed mode fields usually result from assembling video information obtained from different sources. In particular, new coding schemes as MPEG-4 allow for easy combination of image data originating from different sources within a single re-assembled image. Thus, a single field may comprise data originating from motion picture film, from a video camera source and/or from computer generated scenes.

In most fields in "mixed" mode almost all image information originates from image information in a first mode wherein only a small proportion results from data in a second mode (e.g. ticker insertion). Conventionally only the predominant first mode will be detected. Thus, the small proportion of image information in the second mode is disregarded.

It is the object of the present invention to provide an encoding method and encoding apparatus for a sequence of video fields with increased encoding efficiency.

This is achieved by the teaching of claim 1 directed to an encoding method and by the teaching of claim 14 for an encoding apparatus.

According to the present invention, redundant image information is reduced by encoding video fields on a frame data basis when video data of consecutive fields originating from the same frame are reassembled to frame based data. The determination of film mode within a sequence of fields is based on a film mode detection. In order to detect film mode, pixel differences are calculated for pixels at corresponding pixel positions of consecutive fields. The pixel differences are accumulated for at least two different predefined portions of a field. Based on the accumulated differences, it is determined whether motion is present between two consecutive fields. This motion information from a sequence of fields is used to detect a predetermined pattern within the motion information.

Based on the use of two image portions in order to decide whether motion is present between two consecutive fields, film mode detection is performed more accurately and, consequently, the encoding of interlaced video sequences is more efficient.

Different approaches are possible for reassembling two fields to a single frame. First, both fields maybe combined as a whole or, second, both fields are split up into blocks during the encoding procedure and corresponding blocks of both fields are reassembled representing frame based video data.

According to a further aspect of the invention, the second portion of a field for accumulating pixel differences is adjustable in size and/or position within a field in order to select a particular image region for motion detection. Such an adaptation of the second portion in size and/or position makes an even more accurate motion detection and, thus, film mode detection and encoding efficiency possible.

Preferably, motion detection is carried out by comparing the field differences accumulated for two consecutive fields with a threshold value. Such a motion detection does not require any complex hardware implementation.

In a more preferred embodiment, the threshold value for a current field difference value is the preceding field difference value. The use of preceding field difference values enables an adaptation of the motion detection to the image content. Consequently, a more accurate motion detection and an increased encoding efficiency may be achieved.

Preferably, the field differences accumulated for a first and second portion of a field are not compared separately with a threshold value, but are accumulated and the sum is applied to the comparing step. With such a combination, both field difference values are taken into account by a procedure simple to realise.

In a preferred embodiment, the second field difference value is multiplied by a weighting factor prior to accumulation with the first field difference value. Such a weighting procedure allows to emphasise the impact of the second portion on the motion detection result. Depending on the application and image content, a second (or further additional portions, each of these portions maybe weighted differently) may be taken into account in order to yield an improved film mode detection for the encoding procedure.

Preferably, the threshold value (in particular the preceding field difference) is weighted by a factor larger than 1. Such a weighting allows to adapt the threshold to a particular image content and to avoid a less accurate motion indication.

For film mode detection, a determined motion indicator sequence is preferably compared to pulldown patterns generated when converting motion picture film data into video field sequences. In most cases, a pulldown pattern for a conversion into PAL or NTSC video signals is employed.

According to a further aspect of the present invention, a film mode indication is not terminated as soon as the predefined pattern is not detected within the sequence of motion indicators. Preferably, a film mode indication is switched to a camera mode indication after said predefined pattern is not detected for a predetermined number of times. In order to avoid sudden changes of the resulting image quality, short film mode interruptions are suppressed and a continuous film mode is assumed.

Further advantageous embodiments of the present invention are the subject-matter of dependent claims.

The invention will be further described with reference to the accompanying drawings, in which:

Fig. 1 represents a schematic block diagram for encoding video data.

Fig. 2 represents a schematic block diagram of an encoding apparatus of video data further taking similarities between encoding images into account.

Fig. 3a, 3b show timings of film frames converted to interlaced television signals according to PAL and NTSC standard, and the same signal delayed for a period of one field.

Fig. 4 shows a top-level block diagram of a film mode detection unit in an encoder according to the present invention.

Fig. 5 is a simplified block diagram showing details of an embodiment of a field difference unit (201).

Fig 6 is a simplified block diagram showing details of an embodiment of a sequence register (202).

Fig. 7 is a flow-chart showing steps of a pattern matching algorithm, as embodied by the pattern matching unit (203).

Fig. 8 shows examples of a pattern matching for PAL television signals.

Fig. 9 shows examples of a pattern matching for NTSC television signals.

Fig. 10 shows an example of an image with a ticker insertion.

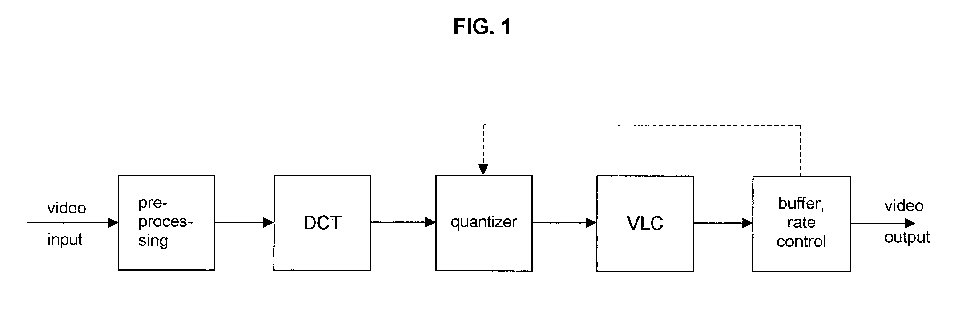

Fig. 1 represents a schematic block diagram of a conventional encoding apparatus for video data. First, an input terminal receives the video data to be encoded. Each field or frame of video data is divided into block units of a predetermined size. Each block data is orthogonally transformed so that video data are transformed into transform coefficients in the frequency domain. A well known transformation method is the Discrete Cosine Transform (DCT). A quantisizer changes the obtained transform coefficients through a predetermined quantisizing process into representative values of various levels. In order to avoid an overflow or an underflow of transmission data the quantising procedure is performed depending on a quantisation level set from a buffer stage. The quantisized coefficients are variable length coded taking statistical characteristics of quantisation coefficients into consideration. The buffer delivers the compressed data from the variable length coder (vlc) usually to a transmission channel at a constant transmission rate or to a recording device. Recording and transmission maybe carried out with a constant or a variable bit rate.

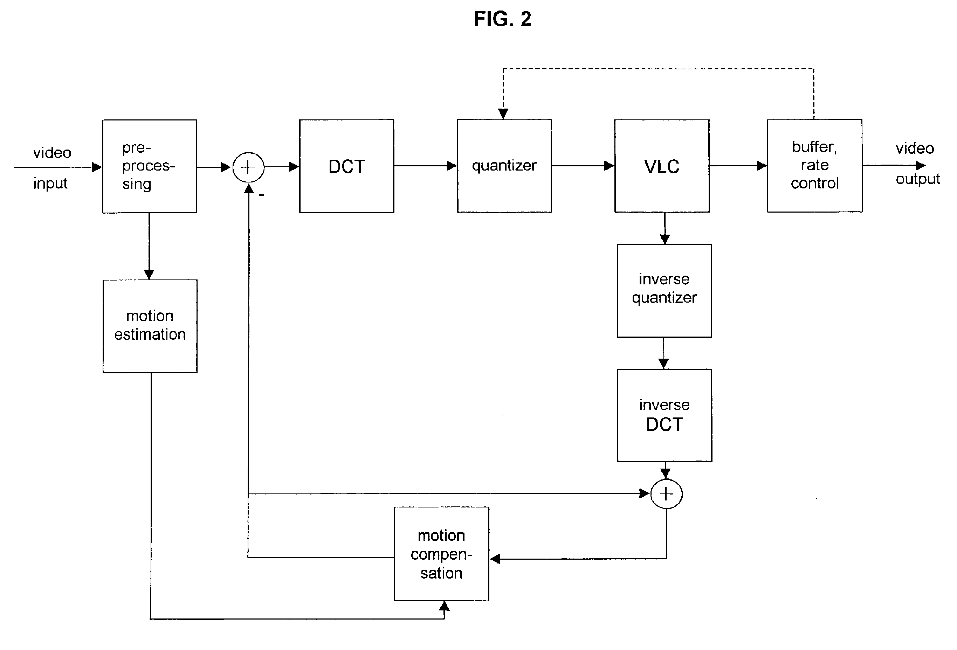

The encoding efficiency may be increased when considering that there are many similar patterns between adjacent frames and fields in the video data. Accordingly, in case of slight motion of an image or an image portion, motion may be estimated by comparing a present field or frame with a previous field or frame. A motion vector is calculated as a result of such motion estimation. Motion compensation is achieved from previous frames or fields with such a motion vector. A feedback loop chain for performing the motion estimation and compensation is shown in fig. 2. In order to further reduce the data to be encoded, a DPCM encoder comprises a feedback loop chain for performing decoding and image prediction based on detected motion vectors.

Interlaced video data may be encoded separately per field or by reassembling fields to frames. In order to avoid an increased encoding effort, fields are encoded separately in case of motion. When transmitting such image information through a transmission channel of a constant transmission rate, the image quality is increased only during a frame based encoding.

Each switching between both coding modes, namely a framed based encoding and a field based encoding maybe perceivable by a viewer. Thus, a frequent change of the encoding modes should be avoided.

As many video data are based on motion picture film converted into interlaced video signals, such video signals may regularly be reassembled and encoded on a frame bases. In order to reliably detect video fields originating from motion picture frames, a film mode detector is well known in the art.

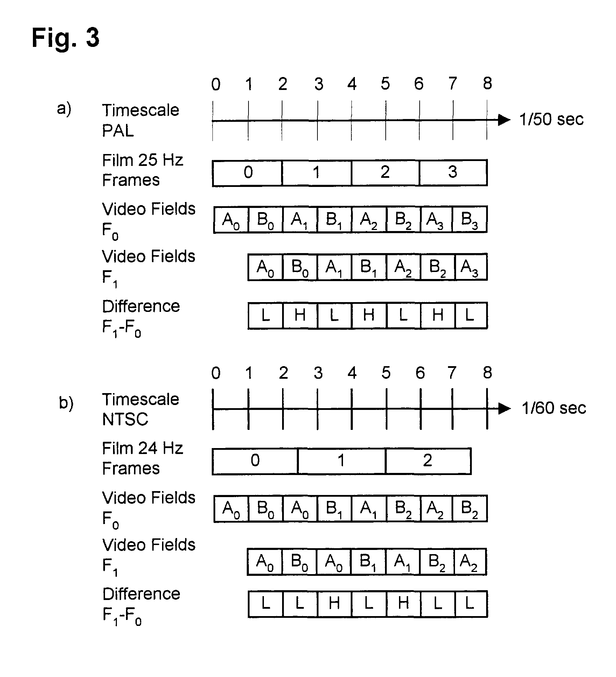

Such film mode detectors detect particular patterns of motion in a sequence of video fields to be encoded. Figures 3 to 10 show how to detect film mode from a sequence of interlaced video field and how to improve the encoding of video fields.

The top graphs in fig. 3a and 3b show a time scale wherein each division corresponds to the time period for one field of a corresponding television signal. Each time division in fig. 3a corresponds to 20ms and in fig. 3b to 16.6ms. The second graphs in fig. 3a and 3b give a corresponding time interval of a motion picture film frame having numbers 0, 1, 2, 3... For generating a PAL television signal, a motion picture frame rate of 25 frames per second is used wherein for a NTSC television signal a motion picture frame rate of 24 frames per second is used.

The third graphs in fig. 3a and 3b show a television signal $F_0$ comprising video fields. Each field of odd lines is marked with an "A" and each field of even lines with a "B". The film frame from which each field originates is indicated by the lower indexes. For instance, video fields $A_0$ and $B_0$ are based on film frame "0".

Video signal $F_1$ represents a television signal which corresponds to $F_0$ wherein each field being delayed by a time interval of one field. Correspondingly, a video signal $F_2$ would indicate a delay of two fields with respect to $F_0$.

The last graph in fig. 3a and 3b show whether an overall difference between $F_1$ and $F_0$ results in a low L or high H difference value. Each difference value L or H represents a low or high accumulated difference between the above depicted fields, respectively. As can be seen from figures 3a and 3b a difference between fields of the same index (originating from the same frame) result in a low difference level L and differences between fields of different index numbers (originating from different frames) result in a high H difference level.

When comparing the sequences of difference levels in figures 3a and 3b the difference level pattern result from the different employed pulldown techniques, either 2-2 or 3-2 pulldown.

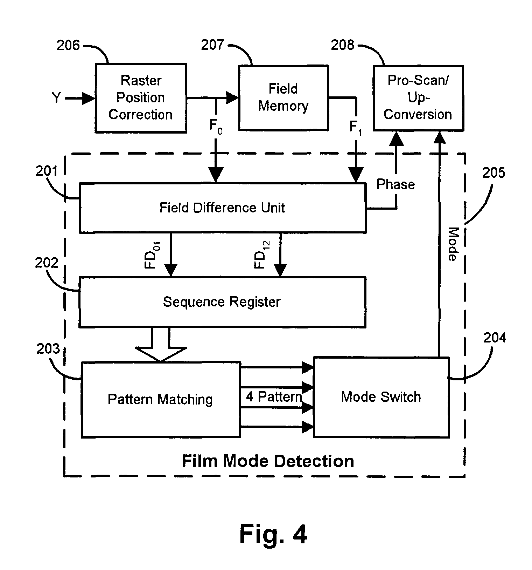

A configuration of a film mode detection unit in an encoder according to the present invention is shown in fig. 4. The film mode detector 205 comprises three main components, namely a film difference unit 201, a sequence register 202 and a pattern matching unit 203. Further, the film mode detector comprises a mode switch 204 in order to output a particular mode, either film mode or camera mode.

The film mode detector 201 further outputs a "phase" signal indicating which two of the fields $F_0$, $F_1$, $F_2$ were generated from the same film frame. This information may alternatively be obtained from a sequence of motion indicators at a later stage.

The input video signal Y is supplied to a raster position correction unit 206. Vertically adjacent pixels of consecutive fields are adjusted to have corresponding pixel positions, providing raster neutral and thus directly comparable fields $F_0$.

The video signal $F_0$ is delayed by a field delay memory 207 providing a video signal $F_1$. Both video signals $F_0$, $F_1$ are supplied to a field difference unit 201 of said film mode detection apparatus 205. The field difference unit 201 calculates absolute differences between pixels at corresponding horizontal and vertical pixel positions of two consecutive fields $F_0$, $F_1$.

The absolute difference values are accumulated for all pixels of a $F_0$. The resulting field difference value $FD_{01}$ (between a current field of video signal $F_0$ and video signal $F_1$), and the stored field difference value $FD_{12}$ (between video signals $F_1$ and $F_2$) are supplied to a sequence register 202. Based on the calculated field differences FD the field difference unit 201 detects motion between consecutive fields and outputs a motion indicative phase bit for each transition between two fields.

According to the present invention, the field difference values $FD_{01}$, $FD_{12}$ comprise difference values accumulated for two different portions of pixels of a field, respectively having first accumulated differences values $FD_{01A}$, $FD_{12A}$ for a first portion of pixels and second accumulated difference values $FD_{01B}$, $FD_{12B}$ for a second portions of pixels within a field. Additional field difference values maybe calculated for further portions within a field and handled respectively.

Sequence register 202 receives the four field differences FD and detects whether motion is present between succeeding fields based on both field differences $FD_A$ and $FD_B$ for each field. A corresponding motion bit is generated and stored in the register. Preferably, said sequence register is configured to store 40 motion bits.

The stored motion bits are supplied to a pattern matching unit 203 for determining whether or not the input video signal originates from motion pictures frames. Depending on the detected patterns, a mode switch 204 outputs a "mode" signal indicating "film mode" or "camera mode".

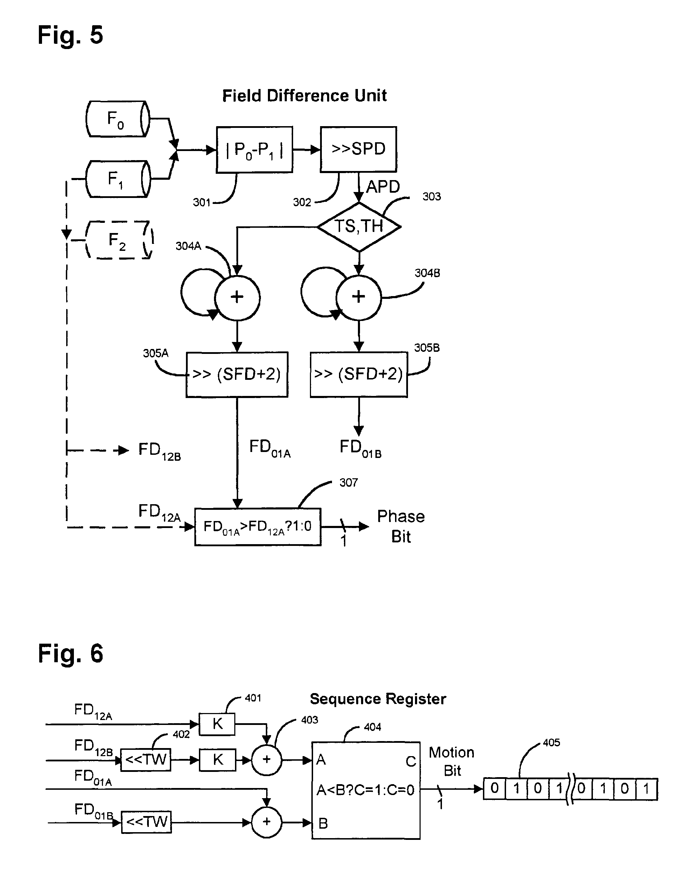

The field difference unit 201 will be described in more detail with reference to figure 5. The field difference unit 201 receives simultaneously video data $F_0$, $F_1$ representing two consecutive video fields. For a more accurate result, the processing of the field difference unit 201 is based on luminance information represented by an 8 bit data word per pixel.

In a different implementation the luminance and chrominance information might well have a data width of more than eight bits. In this case all following data processing is understood with a broader data path. Thus it can also be handled by this invention.

Based on the pixels $P_0$, $P_1$, which are in the same spatial position n and belong to corresponding fields $F_o$, $F_1$, the absolute pixel difference values APD are calculated in step 301. Each absolute pixel difference $APD_n$ again has a data width of eight bits. In order to emphasis on large differences only and on computational effort, the value of each APD may be shifted in step 302 by a shifting value SPD to the right in order to reduce the amount of data to be handled and to reduce the influence of noise on the determination result. It has turned out to be most effective to shift by a maximum of three bits. This operation is indicated by equation (1).

$$APD_n = |P_{n,0} - P_{n,1}| >> SPD \tag{1}$$

The absolute differences APD are accumulated for at least two different portions A and B of pixels within a field, separately. Such a separate processing is indicated by separate processing paths in fig. 5 branching at decision step 303.

Preferably, said first image portion A comprises essentially all active pixels of a field. The second and further additional image portions B only comprise a particular, considerably smaller image portion for emphasizing motion detection between two fields on that smaller image portion. As will be explained in more detail below, the sensitivity for motion within said second portion B might be further increased by increasing the impact of said second portion on the motion detection procedure.

Depending on the particular area predefined for each portion A and B of the fields, the respective calculated absolute differences are accumulated in steps 304A, 304B separately. For the first portion A absolute pixel differences are accumulated in step 304A preferably for all pixels of a field or a particular portion having an aspect ratio of 16:9. The field difference unit 201 may switch between both areas for the first portion A depending on a particular flag FMDR.

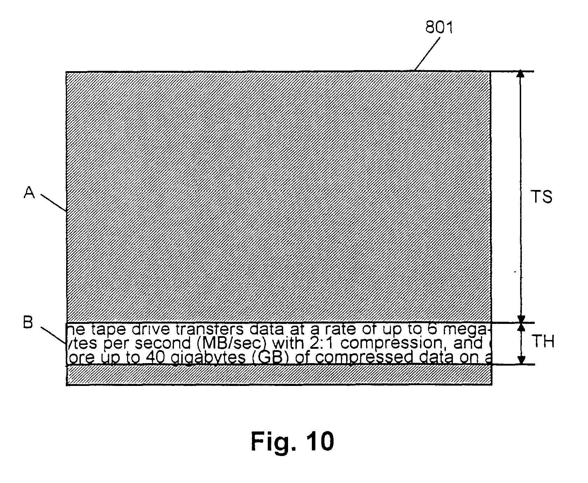

Pixels of a particular image portion B are accumulated in step 304B depending on an area definition by parameters TS and TH. These parameters define the position and height of portion B within the fields. An example of a possible area definition within a field can be obtained by reference to figure 10.

The resulting accumulated difference values may be shifted to the right in order to reduce hardware complexity of the further processing stages. It has turned out that at least a 2 bit shifting is advantageous for phase indication, because influences due to gaussian noise in the video signal are eliminated. The field difference values arrive at larger values proportional to both, the pixel data width and the field dimensions. Thus, the corresponding parameter SFD must be chosen adaptively to this proportional constants. The shift operation is shown in equation (2).

$$FD_{01} = \left( \sum_n APD_n \right) >> (2 + SFD) \tag{2}$$

wherein $FD_{01}$ representing a field difference between a current field $F_0$ and a preceding field $F_1$ and n equals the number of active pixels in the field. The field difference unit outputs both accumulated field difference values $FD_{01A}$, $FD_{01B}$ which are calculated with respect to fields of $F_0$ and $F_1$. In addition, the preceding field difference values $FD_{12A}$, $FD_{12B}$ are supplied from the field difference unit 201 to the following processing stage, namely the sequence register 202.

The field difference unit 201 calculates in step 307 a phase indicator of one bit in order to indicate which of two fields are from the same film frame. A one indicates that fields $F_1$ and $F_2$ introduce a smaller field difference signal $FD_{12A}$ than the field $F_0$ and $F_1$ represented by the field difference signal $FD_{01A}$. A zero determines that $F_0$ and $F_1$ are more similar and thus could originate from the same film frame. In an alternative embodiment, this information is obtained from the stored motion indicators.

Fig. 6 shows a simplified block diagram of a sequence register 202. The sequence register 202 receives four field difference values supplied by said field difference unit 201, namely $FD_{01A}$ and $FD_{01B}$, $FD_{12A}$ and $FD_{12B}$. These field difference values relate to field differences of three consecutive fields and two different image portions A and B. Preferably, the field difference values relating to the same fields are combined before detecting motion information. The combination procedure will be described below in more detail.

In general, the motion bit is generated based on the value of field differences. Unfortunately, field differences are not only due to motion between consecutive fields but may also be due to vertical transitions, e.g. a horizontal dark line in front of a bright background. Such differences result from a vertical offset between odd and even fields. Thus, motion detection cannot only be based on the value of a field difference as this value also results from vertical transitions in a single frame.

The present invention uses an adaptive relative threshold in order to detect a transition between frames. According to the present invention, a current field difference $FD_{01}$ and the preceding field difference values $FD_{12}$ are compared. The preceding field difference value $FD_{12}$ is chosen rather to be weighted in step 401 by a factor K. Factor K preferably larger than 1 for best operation takes one of four values 2, 3/2, 4/3, 5/4. Any smaller or higher value did not lead to a better result. A field difference is considered to represent motion when the current field difference $FD_{01}$ being equal or greater than the preceding field difference $FD_{12}$ multiplied by factor K. Thus, if K=2, the current field difference $FD_{01}$ has to be twice as large as the preceding field difference $FD_{12}$ in order to assume motion between frames $F_0$ and $F_1$, otherwise, the fields $F_1$ and $F_2$ originate from the same frame. This comparison procedure is given in equation (3).

$$FD_{12} * K \le FD_{01} \tag{3}$$

Correspondingly, a motion bit will be supplied to the sequence register. The sequence register 405 is being configured to store the number of motion bits necessary to reliably detect a film scene. It must not be longer than an average scene. Because then an interruption in the pattern might occur and the film mode will not be detected. Register 405 is a FIFO buffer (first in first out) with random access.

As motion detection is based on a particular amount of differences between consecutive fields, it may happen that motion detection fails between fields having no or only few motion in between. Such erroneously not detected film mode does not affect image quality and the encoding of fields having almost no motion is not adversely effected when assembled to frames.

Currently broadcast television programs occasionally comprise a ticker inserted within the lower third of a screen. As the main portion of each field may be in film mode, film mode will be detected. When the ticker insertion is in camera mode, a scan- or upconversion from interlaced to e.g. progressive (i.e. a sequence of complete frames) would result in deteriorated, hardly readable text of the ticker and the encoding efficiency is correspondingly effected. In such a case, namely when video data in camera mode is inserted into a field generally being in film mode, "camera mode" has to be detected in order to enable an efficient encoding.

For that purpose, the field difference unit 201 additionally calculates (at least) a second field difference value for a second portion B of pixels within each field. Two parameters define the second portion of pixels, namely TS and TH. Parameter TS indicates the vertical position of the top of the second portion B with respect to the top of the fields.

The second parameter TH indicates the height of the second portion with respect to the remaining height of the field, i.e. the distance between the top of the second portion B and the bottom of the fields. This is shown in fig. 10. Within a field 801, parameters TS and TH give the vertical position and size of the second portion B. When using these predefined values for TS and TH only two bit data have to be used for the second portion B resulting in a simple hardware configuration. In a further preferred embodiment, the horizontal size of portion B maybe varied.

The field difference unit 201 outputs four field difference values $FD_{01A}$, $FD_{01B}$, $FB_{12A}$, $FB_{12B}$. The field difference values $FD_{01B}$, $FD_{12B}$ resulting from the second portion are weighted in order to adjust the influence of the second portion on the motion detection result. For such a weighting procedure, the filed difference values for portion B are shifted in step 402 to the left. The amount of the left shift of the field difference values is set by parameter TW, which must be chosen adapetively to the overall field motion. Only this leads to a result accurate for all scenes. The comparison procedure carried out by motion detection unit 404 is given by equation (4).

$$K*(FD_{12A} + FD_{12B} << TW) \leq (FD_{01A} + FD_{01B} << TW) \tag{4}$$

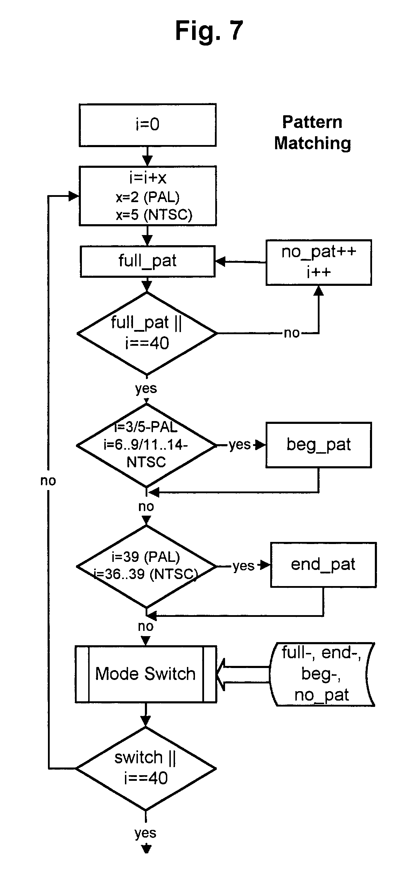

Fig. 7 represents a flow-chart of those steps carried out during pattern matching. In order to detect film mode in a sequence of motion bits which are provided by sequence register 202, a particular pattern of motion bits has to be detected.

Motion picture conversion according to 2-2 pulldown and 3-2 pulldown results in a characteristic pattern of stored motion bits. When an interlaced video, in particular television signal being generated by a 2-2 pulldown, FIFO 405 stores a repeated sequence of bits "10". In case of an NTSC video signal, generated by the 3-2 two pulldown technique, a bit sequence of "10010" occurs repetitively in register 405 when read from right to left. In the following paragraphs these two bit sequences are referred to as reference pattern. One of both may be selected depending on a parameter FORMAT (0=PAL, 1=NTSC).

A simple algorithm of pattern matching may detect one complete pattern in the motion bit sequence and correspondingly indicate film mode when detected. In order to provide a more reliable film mode indication, the present invention examines forty motion bits. Such a more complex matching procedure allows to implement detection error concealment algorithms.

According to the present invention pattern matching generates four different matching result registers (full_pat, beg_pat, end_pat, no_pat). Three of them indicate a matching result of the selected reference pattern with the stored data, namely full_pat for a complete pattern matching, beg_pat for the pattern running into the register and end_pat for the pattern running out of the register. Finally, it is detected whether no pattern or a destroyed pattern is present (no_pat).

The search procedure will be described in detail with reference to figure 7. Index i is provided in order to select all registered positions 1 to 40 of register 405. For pattern detection, the following steps are carried out.

First, index i is incremented by the length of the reference pattern, i.e. by 2 for a PAL television signal and by 5 for a NTSC television signal.

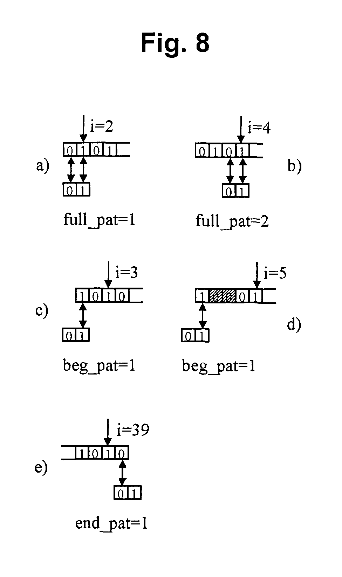

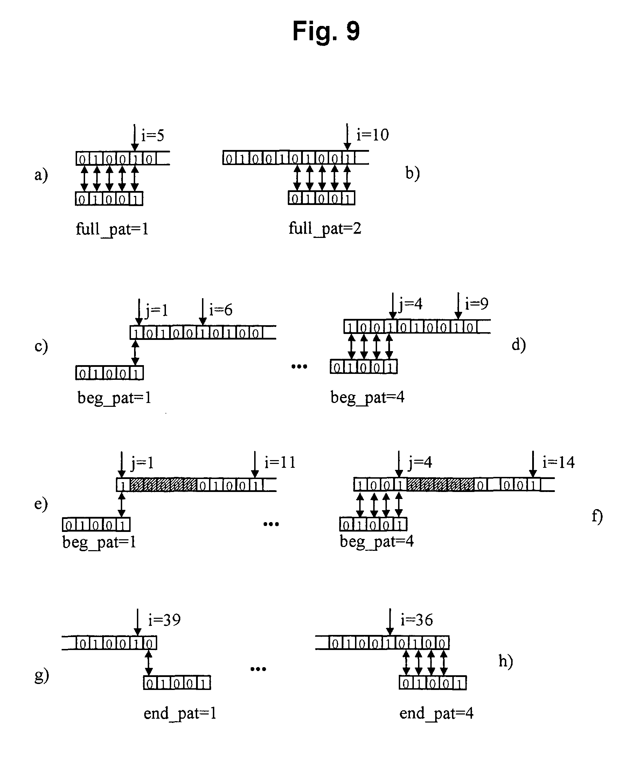

Second, in case the reference pattern is completely detected for the corresponding register positions, register full_pat is incremented by 1. An example for this is given in fig. 8a and fig. 8b for a PAL television signal at register positions 2 and 4. A corresponding example is given for a NTSC television signal in fig. 9a and fig. 9b.

In addition, a beginning pattern is searched when, at the beginning of the register, a number of bits remain having a number less than a complete pattern. Fig. 8c, Fig. 9c and Fig. 9d give examples for a detected "beginning pattern" preceding an already detected pattern for the immediate consecutive motion bit positions. When a partial pattern is found at the beginning of the register, which is in positional conformity with the detected complete pattern, register beg_pat is incremented by 1. The same situation applies to fig. 8d and fig. 9e and f. The situations correspond to those of fig. 8c and fig.9c and d. The only difference is that a first complete pattern could not be detected due to motion detection errors.

Finally, an ending pattern is shown in fig. 8e and fig. 9g and h. Register end_pat is incremented in situations corresponding to those of the beg_pat register.

In case no complete pattern has been detected, index i and register no_pat are incremented by one. Then, the processing returns to the first step.

Next, the conditions for signalling a mode switch are checked and, when the conditions are met or i = 40, the search is stopped.

The two existing reference patterns described for a conversion into PAL and NTSC interlaced video sequences may be replaced by new reference patterns relating to e.g. computer generated sequences.

Referring to fig. 4, the operation of mode switch 204 is described. Mode switch 204 receives count values for each pattern register, namely the registers full_pat, beg_pat, end_pat and no_pat. In addition, the mode switch receives parameters defining switching conditions in order to provide a more reliable film mode indication. These parameters, CDLY and FDLY, determine when to switch from film mode indication to camera mode indication and vice versa in order to effect a hysteresis behaviour. Such a hyseresis behaviour smoothes the switching between film and camera mode resulting in a less obvious change of image quality.

CDLY determines the number of fields which do not conform to a film mode pattern before the mode switch returns to camera mode. A single pattern not being equal to a film mode pattern should not initiate a return to camera mode. Depending on the image content and quality a number of 2 to 5 consecutive not detected film mode patterns provides good results with respect to image quality improvements.

The second parameter FDLY determines the number of consecutive fields which have to be in conformity with a reference pattern before mode switch 204 outputs a film mode indication. For a switch to film mode a single pattern not being equal to a film mode pattern should not be admitted.

These switching conditions are given by the following formula wherein equation (5) relates to a switch from film to camera mode and equation (6) relates to a switch from camera into film mode.

$$(no\_pat \geq CDLY) \ \&\& \ !beg\_pat \qquad (5)$$

$$full\_pat* \ (2\text{-PAL}/5\text{-NTSC}) + beg\_pat + end\_pat > FDLY \qquad (6)$$

Summarising, the present invention provides a considerable increase in accuracy of film mode detection and thus coding efficiency by taking an additional image portion of the fields into account when detecting motion between fields of a video sequence.

**Claims**

1. A method for encoding a sequence of video fields, comprising the steps of:

   receiving a sequence of video fields to be encoded,

   calculating (301) absolute pixel differences between spatially corresponding pixels of a current and a previous field,

   accumulating (304A, 304B) said absolute pixel differences for a first predefined portion and a second predefined portion of a field and providing a first and a second field difference value ($FD_A$, $FD_B$),

   determining (404) whether or not motion is present between a current and a previous field based on the first and second field difference values ($FD_A$, $FD_B$,) and generating a motion indicator depending on the determination result,

   indicating film mode when a predefined pattern is detected within a sequence of motion indicators,

   re-assembling the video data of two consecutive fields originating from the same film frame into frame based video data when film mode is detected for these fields,

   encoding said re-assembled frame based data and

   outputting the encoded video data.

2. A method according to claim 1 wherein said second portion of a field is adjustable in size and/or position within a field.

3. A method according to claim 1 or 2 wherein motion between two consecutive fields is determined by comparing a field difference value accumulated for a current field with a predetermined threshold value and motion is determined when said field difference value of the current field is larger than said threshold value.

4. A method according to claim 3, wherein said threshold value being a field difference value accumulated for the previous field.

5. A method according to claim 3 or 4 wherein the first and second field difference values of a field are accumulated prior to said comparing step.

6. A method according to any of claims 3 to 5, wherein said threshold value is multiplied (401) by a factor (K) prior to said comparing step, said factor (K) being larger than 1.

7. A method according to claim 5 or 6, wherein said second field difference ($FD_B$) value is multiplied (402) by a weighting factor (TW) prior to be accumulated with said first field difference value ($FD_A$), said factor (TW) having a value larger than 1.

8. A method according to any of claims 1 to 7, wherein said film mode detecting step comprises the steps of:

   storing motion indicators determined for a sequence of consecutive fields,

   detecting said predefined pattern within said sequence of stored motion indicators,

   indicating film mode when said predefined pattern is detected within said sequence of stored motion indicators.

9. A method according to any of claims 1 to 8, wherein said predefined pattern being a pull-down pattern for the conversion of film frames into video fields.

10. A method according to any of claims 1 to 9, wherein an indication of film mode is terminated after said predefined pattern is not detected for a predefined number of consecutive fields.

11. A method according to any of claims 1 to 10 wherein said pixel differences are calculated based on luminance information of the pixels.

12. A method according to any of claims 1 to 11 wherein an indication which two of three consecutive fields originate from the same film frame is generated based on the first field difference values ($FD_{01A}$, $FD_{12A}$), wherein those two fields are indicated to originate from same film frame having the smaller first field difference values ($FD_{01A}$, $FD_{12A}$).

13. A method according to any of claims 1 to 12 wherein the encoding step subjects the two dimensional video data to an orthogonal transform in order to transform the video data into transform coefficients in the frequency domain.

14. An encoding apparatus for encoding a sequence of video fields, comprising:

   a subtractor (301) for calculating pixel differences between spatially corresponding pixels of a current and a previous field,

   a rectifier (301) for receiving said calculated pixel differences and providing absolute pixel differences,

   a first and a second accumulator (304A, 304B) for accumulating said absolute pixel differences received from said rectifier for a first and a second portion within a field and providing a first and a second field difference value,

   a motion detection unit (202) for determining whether or not motion is present between a current and a previous field based on the field difference values and generating a corresponding motion indicator,

   a pattern matching unit (203) for comparing a predefined pattern with a sequence of generated motion indicators,

   a mode switch (204) for generating a film mode indication based on a detection of said predefined pattern within said motion indicators,

   a re-assembling unit for re-assembling video data of two consecutive fields originating from the same film frame into frame based video data when film mode is detected for these fields and

an encoding unit for encoding the video data of said re-assembled frame based video data.

**15.** An encoding apparatus according to claim 14, further comprising offset control means, adjusting the position of said second portion within a field and/or size control means, adjusting the size of said second portion in vertical and/or horizontal direction.

**16.** An encoding apparatus according to claim 14 or 15 further comprising a comparator (404) for comparing a field difference value accumulated for a current field with a predetermined threshold value and motion being determined when said field difference value of the current field being larger than said threshold value.

**17.** An encoding apparatus according to claim 16, wherein a field difference value accumulated for the previous field being applied to said comparator (404) as said threshold value.

**18.** An encoding apparatus according to claims 16 or 17 further comprising adding means (403) for adding the first and the second field difference values of a field before providing the sum of both field difference values to said comparator (404).

**19.** An encoding apparatus according to any of claims 16 to 18, further comprising a multiplier (401) for multiplying the field difference value of the previous field by a factor (K) and providing the result to said comparator (404), said factor (K) being larger than 1.

**20.** An encoding apparatus according to claims 18 or 19, further comprising a multiplier (402) for multiplying said second field difference value by a weighting factor (TW) and providing the multiplication result to said adder (403), said factor (TW) having a value larger than 1.

**21.** An encoding apparatus according to any of claims 14 to 20, further comprising a memory for storing a pull-down pattern of a particular conversion of film frames into video fields, said stored pull-down pattern being applied to said pattern matching unit (203) as said predefined pattern.

**22.** An encoding apparatus according to any of claims 14 to 21, wherein

said pattern matching unit (203) comprises a register (no_pat) storing a count value which is incremented based on the comparation result each time said predefined pattern is not detected within said sequence of motion indicators,

said mode switch (204) comprising a comparator for detecting whether or not the count value provided from said register (no_pat) exceeds a predetermined threshold value (CDLY) and

said mode switch (204) maintains the film mode indication based on the comparation result as long as said count value does not exceed the predetermined threshold value (CDLY).

**23.** An encoding apparatus according to any of claims 14 to 22, further comprising a signal separator to only provide the luminance information of the pixels to said subtractor (301).

**24.** An encoding apparatus according to any of claims 14 to 23 further comprising a phase detector (307) receiving the two first field difference values ($FD_{01A}$, $FD_{12A}$) calculated with respect to three consecutive fields ($F_0$, $F_1$, $F_2$) for indicating which two of the three consecutive fields originate from the same film frame based on the first field difference values, wherein those two fields are indicated to originate from the same film frames having the smaller field difference value.

**25.** An encoding apparatus according to any of claims 13 to 22, wherein said encoding unit comprising a transform unit for performing an orthogonal transform with respect to two-dimensional video data in order to provide transform coefficients in the frequency domain.

FIG. 1

**FIG. 2**

# Fig. 3

a)

**Timescale PAL**

0 1 2 3 4 5 6 7 8 → 1/50 sec

**Film 25 Hz Frames**

| 0 | 1 | 2 | 3 |

**Video Fields $F_0$**

| $A_0$ | $B_0$ | $A_1$ | $B_1$ | $A_2$ | $B_2$ | $A_3$ | $B_3$ |

**Video Fields $F_1$**

| $A_0$ | $B_0$ | $A_1$ | $B_1$ | $A_2$ | $B_2$ | $A_3$ |

**Difference $F_1$-$F_0$**

| L | H | L | H | L | H | L |

b)

**Timescale NTSC**

0 1 2 3 4 5 6 7 8 → 1/60 sec

**Film 24 Hz Frames**

| 0 | 1 | 2 |

**Video Fields $F_0$**

| $A_0$ | $B_0$ | $A_0$ | $B_1$ | $A_1$ | $B_2$ | $A_2$ | $B_2$ |

**Video Fields $F_1$**

| $A_0$ | $B_0$ | $A_0$ | $B_1$ | $A_1$ | $B_2$ | $A_2$ |

**Difference $F_1$-$F_0$**

| L | L | H | L | H | L | L |

**Fig. 4**

## Fig. 5

**Field Difference Unit**

$F_0$

$F_1$

$F_2$

$| P_0 - P_1 |$  301

$>> SPD$  302

APD  303

TS,TH

304A  $+$

304B  $+$

305A  $>> (SFD+2)$

305B  $>> (SFD+2)$

$FD_{12B}$

$FD_{01A}$

$FD_{01B}$

$FD_{12A}$

$FD_{01A} > FD_{12A} ? 1:0$  307

Phase Bit

1

## Fig. 6

**Sequence Register**

$FD_{12A}$  K  401

$FD_{12B}$  $<<TW$  402  K

403  $+$

404  A  C

$FD_{01A}$  A<B?C=1:C=0  B

$FD_{01B}$  $<<TW$  $+$

Motion Bit

1

405  | 0 | 1 | 0 | 1 |  | 0 | 1 | 0 | 1 |

# Fig. 7

**Pattern Matching**

# Fig. 8

# Fig. 9

a)

i=5

full_pat=1

b)

i=10

full_pat=2

c)

j=1   i=6

beg_pat=1

···

d)

j=4   i=9

beg_pat=4

e)

j=1   i=11

beg_pat=1

···

f)

j=4   i=14

beg_pat=4

g)

i=39

end_pat=1

···

h)

i=36

end_pat=4

801

TS

A

B

ne tape drive transfers data at a rate of up to 6 mega-
/tes per second (MB/sec) with 2:1 compression, and
ore up to 40 gigabytes (GB) of compressed data on a

TH

## Fig. 10

**European Patent Office**

## EUROPEAN SEARCH REPORT

Application Number

EP 00 12 2484

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 00 33579 A (HUI YAU WEI LUCAS ;STMICROELECTRONICS ASIA PACIFI (SG)) 8 June 2000 (2000-06-08)<br><br>* page 1, line 13 - page 4, line 14 *<br>* page 5, line 21 - page 5, line 29 *<br>* page 7, line 28 - page 9, line 15 *<br>* figures 2-5 *<br>* claim 23 * | 1-3,5,6, 9,11,12, 14-16, 18,19, 23,24 | H04N7/26 |
| Y | | 8,10,13, 21,22,25 | |
| A | | 4,7,17, 20 | |
| | --- | | |
| Y | EP 0 994 626 A (ST MICROELECTRONICS SRL) 19 April 2000 (2000-04-19) * paragraph [0097] * | 8,10,21, 22 | |
| A | | 1,11,14, 23 | |
| | --- | | **TECHNICAL FIELDS SEARCHED** (Int.Cl.7) |
| Y | LE GALL D J: "THE MPEG VIDEO COMPRESSION STANDARD" COMPUTER SOCIETY ANNUAL CONFERENCE. (COMPCON),US,LOS ALAMITOS, IEEE COMP. SOC. PRESS, vol. CONF. 36, 25 February 1991 (1991-02-25), pages 334-335, XP000294007 ISBN: 0-8186-9134-4 * the whole document * | 13,25 | H04N |
| A | | 1,14 | |
| | --- | | |
| X | WO 00 51355 A (HUI YAU WEI LUCAS ;GOH KWONG HUANG (SG); STMICROELECTRONICS ASIA P) 31 August 2000 (2000-08-31) * page 3, line 19 - page 6, line 15 * | 1,12,14, 24 | |
| | --- | | |
| | -/-- | | |

The present search report has been drawn up for all claims

| Place of search | Date of completion of the search | Examiner |
|---|---|---|
| THE HAGUE | 12 February 2001 | Fassnacht, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
................................................
& : member of the same patent family, corresponding document

EPO FORM 1503 03.82 (P04C01)

**European Patent Office**

## EUROPEAN SEARCH REPORT

Application Number

EP 00 12 2484

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 933 942 A (MATSUSHITA ELECTRIC IND CO LTD) 4 August 1999 (1999-08-04) <br> * paragraph [0033] * <br> * paragraph [0095] - paragraph [0099] * <br> ----- | 1-25 | |
| | | | **TECHNICAL FIELDS SEARCHED (Int.Cl.7)** |

The present search report has been drawn up for all claims

| Place of search | Date of completion of the search | Examiner |
|---|---|---|
| THE HAGUE | 12 February 2001 | Fassnacht, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 198 139 A1**

ANNEX TO THE EUROPEAN SEARCH REPORT
ON EUROPEAN PATENT APPLICATION NO.

EP 00 12 2484

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2001

| Patent document cited in search report | | Publication date | Patent family member(s) | Publication date |
|---|---|---|---|---|
| WO 0033579 | A | 08-06-2000 | NONE | |
| EP 0994626 | A | 19-04-2000 | JP 2000125303 A | 28-04-2000 |
| WO 0051355 | A | 31-08-2000 | NONE | |
| EP 0933942 | A | 04-08-1999 | WO 9904569 A | 28-01-1999 |

For more details about this annex : see Official Journal of the European Patent Office, No. 12/82